# EUROPEAN PATENT SPECIFICATION

(11) **EP 0 576 085 B1**
(45) Date of publication and mention of the grant of the patent: **13.08.1997**
(21) Application number: 93201776.7
(22) Date of filing: 21.06.1993
(51) Int. Cl.: A01J 7/00, A01K 1/12

(54) **A construction for automatically milking animals, such as cows**
Gerät zum automatischen Melken von Tieren, wie zum Beispiel Kühen
Dispositif de traite automatique d'animaux, comme par exemple des vaches

(30) Priority: 25.06.1992 NL 9201127
(43) Date of publication of application: 29.12.1993
(73) Proprietor: C. van der Lely N.V., NL-3155 PD Maasland (NL)
(72) Inventor: van der Lely, Cornelis, CH-6300 Zug (CH)
(74) Representative: Mulder, Herman

(56) References cited:
- EP-A- 0 091 892
- EP-A- 0 323 444
- EP-A- 0 432 148
- EP-A- 0 439 239
- EP-A- 0 480 542
- GB-A- 2 218 888

## Description

The invention relates to a construction for automatically milking animals, such as cows, comprising at least one automatically operating milking implement and a milking robot including milking means.

Such a construction is known from GB-A-2218888.

GB-A-2218888 describes the milking arrangement as having automatic attachment of teat cups to the teats following a program sequence stored in a computer, unless an override input is activated. The sequence of application can be repeated one or more times in the event of initial failure, after a second attempt the operator is signalled to apply corrective action. Sometimes the damage can be serious so that certain parts of the robot must be repaired or replaced. Before the milking robot is operational again, a considerable period of time may elaps. During this period no milk can be obtained. When the disturbance is of a long duration, the animal's health can be endangered.

The invention has for its object to provide a construction as described above, in which said disadvantages do not occur or are at least obviated to a significant extent.

To that end, the automatically operating milking implement in accordance with the invention is equipped with means, with the aid of which the automatically operating milking implement can be switched over to manual operation, while the construction furthermore includes a manually operable milking implement. This has the advantage that, if the automatically operating milking implement is out of order, it can be switched off, and milking could be immediately continued by means of the manually operable milking implement.

In accordance with a further feature of the invention, the construction includes at least one emergency device which serves as an energy source when the construction cannot use the electricity from the power mains. In the event of a power cut, the milk production is not endangered, as a manual or entirely automatic switch to the emergency device can be made.

In accordance with a further feature of the invention, the emergency device comprises at least one battery for the supply of electricity.

In accordance with a further feature of the invention, the construction includes means for making inoperative a number of components and/or tasks of the construction which are not vital to the milking procedure, such as e.g. the milk production inspection or the teat disinfecting apparatus. In the case in which, for example, a fault occurs in the milk production inspection, a signal is applied to the computer via, for example, an error reporting system, whereafter the computer interrupts the milking procedure and puts the milking robot out of operation. If the disturbance cannot be quickly repaired, the milk recovery is endangered at that moment. To prevent this, the user has the possibility to put the milk inspection out of operation, so that milking with the milking robot can be continued without the milk production being monitored. In an alternative embodiment, putting the non-vital components and/or tasks of the construction out of operation is automatically effected by the computer. Consequently, no human intervention is nececessary any more.

In accordance with a further feature of the invention, the construction includes a carrier member on which teat cups are provided. In accordance with a still further feature of the invention, the carrier member is attached to a straight guide, by means of which the teat cups can be moved to near the leading side of the milking box. For the case in which a disturbance occurs in e.g. the carrier member carrying the teat cups, the carrier member with the teat cups can be moved along in a straight line to near the leading side of the milking box, which results in more space for manual milking.

In accordance with a further feature of the invention, the construction includes a second set of teat cups with tubes. The second set of teat cups with tubes is couplable, in accordance with a still further feature of the invention, to a vacuum pump of the milking implement via a number of valves or cocks. In case the automatic milking implement has broken down, it can be removed by sliding it along the straight guide and the second set of teat cups can be connected to the milking implement, whereafter the user can continue milking manually until the automatic milking implement has been repaired.

For a better understanding of the invention and to show how the same may be carried into effect, reference will now be made, by way of example, to the accompanying drawings, in which:
Figure 1 is a plan view of a first embodiment of the construction in accordance with the invention, in which the teat cups of the milking robot have been moved to under an animal present in the milking parlour;
Figure 2 is a plan view of a second embodiment of the construction in accordance with the invention, in which a second milking cluster has been moved to under an animal present in the milking parlour;
Figure 3 is a side view of the construction shown in Figure 2;
Figure 4 is, to an enlarged scale, a view of an exchangeable part of the construction in accordance with FIgures 1 to 3;
Figure 5 is, to an enlarged scale, a view of a further exchangeable part of the construction of Figures 1 to 3, and
Figure 6 is a side view taken in the direction of the arrow VI in Figure 5.

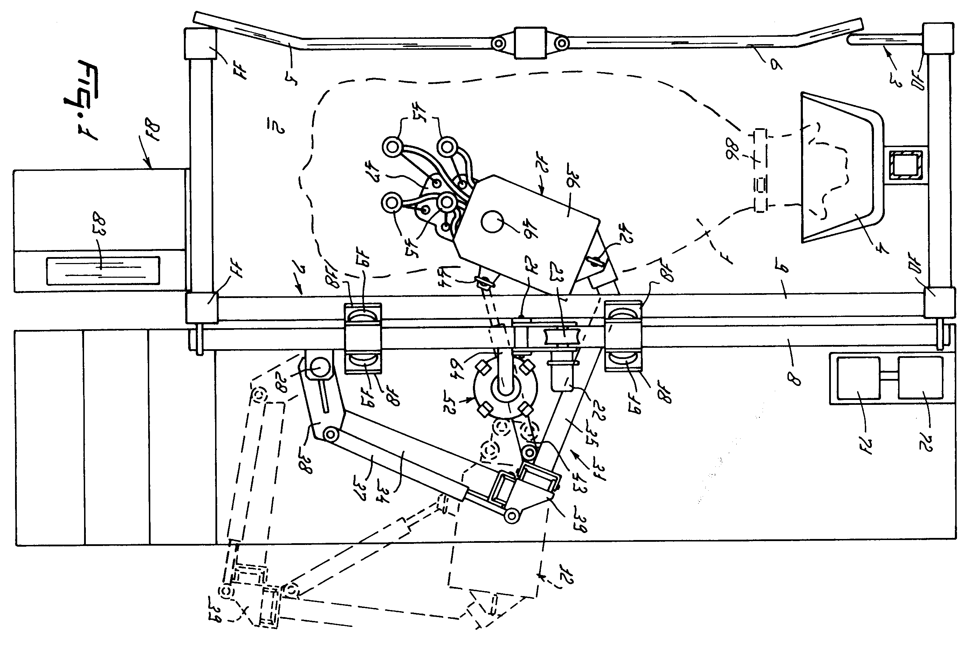

In the plan view of the construction shown in Figure 1, a cow 1 is shown which is standing in a milking parlour 2, which milking parlour 2 is surrounded by a railing 3, which gives the cow 1 a limited freedom of movement. The milking parlour 2 can be entered by the cow 1 from the side at the rear, while the cow 1 can leave the milking parlour 2 again from this side at the front. As the front side of the milking parlour 2 is equipped with a feeder implement 4, the cow 1 will advance sufficiently far and arrive in a position in which she can easily be milked. At the longitudinal side of the milking parlour 2 other than the one at which the entrance 5 and the exit 6 are located, a portion of a rigidly arranged frame 7 which forms part of the railing 3 (Figure 3) is accommodated, which frame 7 comprises a first frame portion 8 and a second frame portion 9. The first frame portion 8 extends parallel to and is predominantly located above the second frame portion 9. The first frame portion 8 is then rigidly connected to the outer side of two vertical pillars 10 and 11 which form part of the railing 3, whilst the second frame portion 9 is in a fixed position between these two pillars 10 and 11. A milking robot 12 for automatically milking animals is movably connected to the first frame portion 8, whilst this milking robot 12 bears against the second frame portion 9, which in all other respects is located at such a height that arms of the robot 12 can be moved underneath this frame portion to under the cow 1 present in the milking parlour 2. The milking robot 12 includes a carrier frame 13 for the further parts of the milking robot 12. By designing the first frame portion 8 as a rail, the carrier frame 13, and consequently the entire milking robot 12, can easily be moved along this frame portion. The carrier frame 13 comprises a beam 14 which predominantly extends parallel to the first frame portion 8, a beam 15 which is rigidly connected thereto and extends perpendicularly in the vertical downward direction, and two struts 16. Pairs of supporting elements 17 are provided near the ends of the beam 14 (Figure 3). Attached at an angle of approximately 45° to each pair of supporting elements 17 by means of supporting plates 18 rigidly connected thereto there are two rollers 19 which form a roller element pair, the arrangement being such that the carrier frame 13 is suspended from the first frame portion 8 and is easily movable therealong. Two carriers 20 are accommodated on both sides of the beam 14 of the carrier frame 13. A motor 22 is secured to these carriers 20, capably of pivoting about a pivot shaft 21. This motor 22 drives a roller 23 which preferably has a rubber surface, which roller 23 is pushed by means of a spring member 24 against the first frame portion 8. Since the spring member 24 acts between the motor 22 and the carrier frame 13, the roller 23, which is to be driven by the motor 22, is maintained in the position in which it presses against the first frame portion 8, so that, when the motor 22 is driven, it is moved along the first frame portion 8 in the longitudinal direction, taking the entire carrier frame 13 with it.

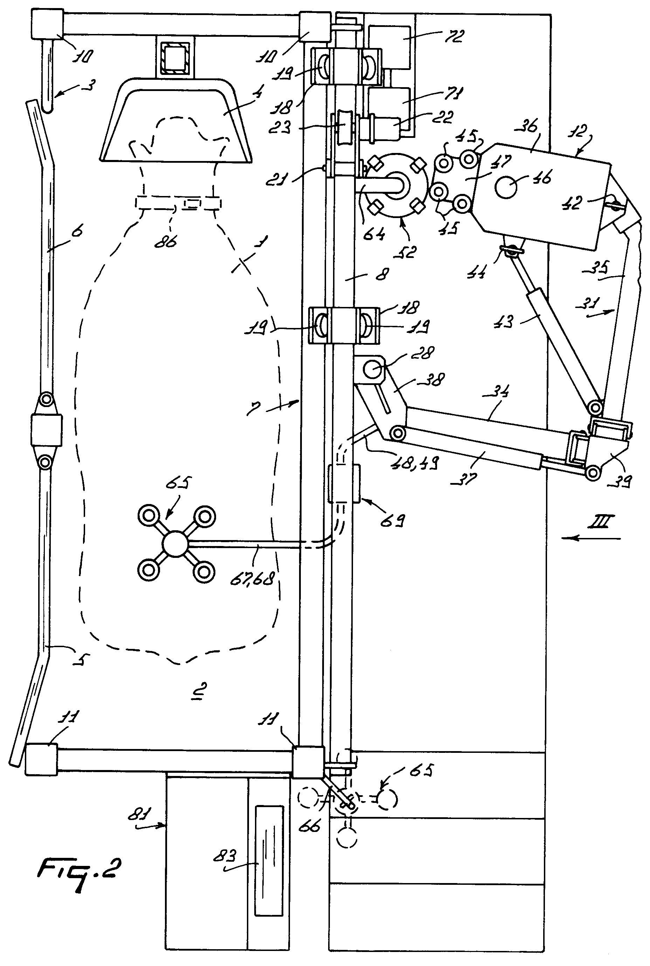

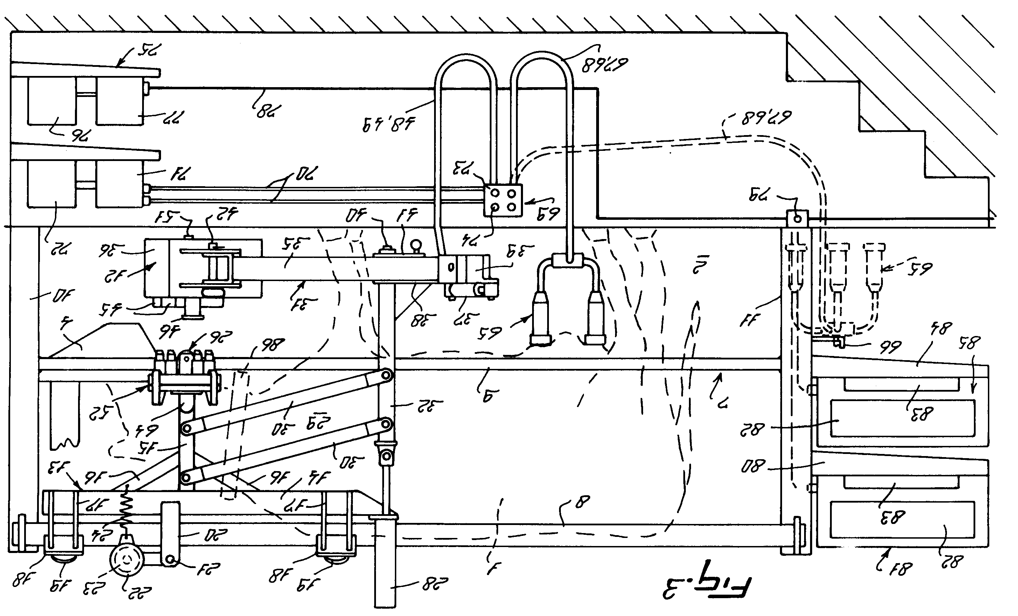

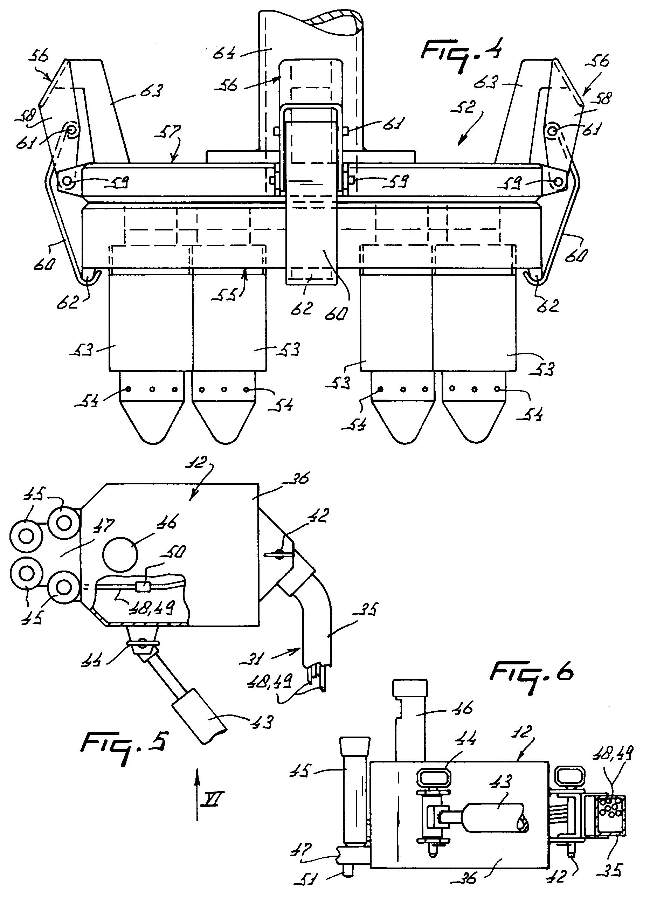

In the present embodiments, the beam 15 of the carrier frame 13 extends vertically downwardly to just below the second frame portion 9. A freely pivotal roller element 26 is provided at the bottom side of this beam 15. The second frame portion 9 is constituted by a rail, and more specifically by a rail in the form of a U-shaped beam, the freely pivotal roller element 26 being accommodated such that it is movable between the two upright edges of the U-shaped beam. Thus, the milking robot 12 bears against the second frame portion 9 and, when the milking robot 12 is moved over the first frame portion 8 by the motor 22, the milking robot can easily move along the second frame portion 9. In addition to the carrier frame 13, the milking robot 12 includes a robot arm construction 31 (Figure 2) which is movable by means of an operating cylinder 28 in a predominantly vertical direction relative to the carrier frame 13. The robot arm construction 31 is movably connected to the carrier frame 13 by means of a four-bar linkage construction 29. The four-bar linkage construction 29 includes two parallel and spaced-apart arms 30 of equal length. The robot arm construction 31 comprises a substantially vertical robot arm 32, as well as in a substantially horizontal plane movable robot arms 34, 35, 36. The vertical robot arm 32 is connected with the beam 15 of the carrier frame 13 by the four-bar linkage construction 29. The operating cylinder 28 is operative between the carrier frame 13 and the vertical robot arm 32. In the present embodiments, the operating cylinder is a servo-pneumatic positioning cylinder.

As is shown in Figure 2, the milking robot 12 comprises robot arms 34, 35 and 36. The arms 34 and 35 are disposed at a fixed angle of 90° relative to each other. The arms 34 and 35 are therefore moved in conjunction, more specifically by an operating cylinder 37 which is arranged between a supporting plate 38 connected to the vertical robot arm 32 and a connecting member 39 provided between the two robot arms 34 and 35. The two robot arms 34 and 35 are pivotal about a predominantly vertical pivot shaft 40 between the supporting plate 38 and a supporting plate 41, the latter being also rigidly connected to the vertical robot arm 32, more in particular to the bottom end thereof.

The robot arm 36 is pivotal relative to the robot arm 35 about a predominantly vertical pivot shaft 42 and is rotated relative to this shaft 42 by means of an operating cylinder 43 disposed between the robot arm 36 and that end of the robot arm 35 that is located near the connecting member 39. As is shown in Figures 5 and 6, the vertical pivot shaft 42 is designed as a removable pin with a handle and a locking pin. The operating cylinder 43 is also connected to the robot arm 36 via a detachable pin 44 provided with a handle. By removing the pin 42 and the pin 44, the robot arm 36 can rapidly and simply be decoupled from the robot arm 35. This is in particular advantageous, when the arm 36 must be replaced, for example, because it is out of order and cannot rapidly be repaired. The teat cups 45 which are connectable to the teats of the cow 1 are located near the end of the robot arm 36. The arm 36 is further provided with a sensor 46, which by performing a sector-by-sector scanning motion can accurately determine the position of the teats of the cow 1, whereby the operating cylinders 28, 37 and 43 can be controlled such by means of the computer that the teat cups 45 can be connected in the proper manner to the teats. In the rest position the teat cups 45 as shown in Figure 6, are kept against the carrier member 47 of the robot arm 36 by (non-shown) cylinders. In an alternative embodiment, not shown, the teat cups 45 can be kept against the carrier member 47 by means of electromagnets. Milk lines 48 and air lines 49 are connected to the teat cups 45. The milk lines 48 and the air lines 49 include, as is shown in Figure 5, sensors 50 for monitoring the milk flow and the air flow. In addition, mastitis sensors, not further shown, are incorporated in the milk lines 48, with the aid of which the milk production can be inspected. The bottom side of the carrier member 47 is provided with a sensor 51, which produces a signal when the carrier member 47 comes into contact with the floor of the milking parlour 2. To prevent the carrier member 47 from being contaminated or damaged on contact with the floor, the operating cylinder 28 is energized immediately after the sensor 51 has supplied the signal, so that the arm 36 is immediately retracted upwardly.

A cleaning device 52 for cleaning the teat cups 45 is accommodated at the bottom side of the beam 15 of the carrier frame 13. In Figure 4 this cleaning device 52 is shown to an enlarged scale. The cleaning device 52 comprises four spray caps 53 which at their bottom sides are provided with perforations 54. The spray caps 53 are accommodated remote from each other in a first lid-shaped housing 55. The first housing 55 is clamped on a second box-like housing 57 by means of four quick couplings 56. The quick coupling 56 includes a handle 58 which is connected to the second housing 57 by means of a horizontal pivot shaft 59. Attached to the handle 58 is a strip 60 which is made of resilient material and can rotate about a horizontal shaft 61 relative to the handle 58. The bottom side of the strip 60 is folded such as to form a hook, the arrangement being such that the folded piece of strip can co-operate with an edge 62 on the first housing 55. On the second housing 57 there are four stops 63, against which the upper side of the handle 58 bears when the first housing 55 and the second housing 57 are clamped up against each other by means of the quick couplings 56. In addition, there is connected to the second housing 57 a line 64, through which the rinsing and/or cleaning liquid for the teat cups can be passed. Cleaning the teat cups 45 is effected by connecting them to the spray caps 53 and by thereafter forcing rinsing liquid through the perforations 54. Should a blockage or a fault occur in the cleaning device 52, then the cleaning device 52 can rapidly be taken apart by means of the quick couplings 56, whereafter the separate parts of the cleaning device 52 are easily accessible and/or replaceable.

In the embodiment shown in Figures 2 and 3, the construction includes, in addition to a first set of teat cups 45 for automatically milking animals, a further second set of teat cups 65. In the rest position, as is shown in Figure 3 by means of broken lines, the second milking cluster 65 is suspended from a hook 66 attached to the upright 11. The second milking cluster 65 includes a milk line 67 and an air line 68, which are connected to a valve block 69. Connected to the valve block 69 there are also the milk line 48 and the air line 49 of the first milking cluster 45. In addition, two air lines 70 are connected to the valve block 69, whose other ends are connected to an air pump 71. The air pump 71 is driven by a motor 72 and then produces the required vacuum for milking. The valve block 69 is further provided with switching means, with the aid of which a choice can be made between energization of the first set of teat cups 45 or the second set of teat cups 65. The switching means comprise, as is shown in Figure 3, a panel 73 on which there are a plurality of switches 74. Using the switches 74, the construction can be switched from automatic milking to manual milking. By throwing the switches 74, the air flow and the milk flow in the milk lines 48 and the air lines 49 of the first set of teat cups 45 are interrupted, while the air lines 70 are connected to the air line 68 of the second set of teat cups 65. The milk line 67 of the second set of teat cups 65 is coupled during the switching operation to a (non-shown) milk discharge line. After the switching procedure has ended, the user can manually connect the second set of teat cups 65 to the cow (Figure 3), whereafter milking can start. By moving for the purpose of manual milking the robot arm construction 31 over the straight guide 8 towards the feeder implement 4, the robot arm construction 31 hardly causes any obstruction during manual connection of the second set of teat cups 65. The second set of teat cups 65 is more in particular usable then when the milking robot 12 is out of order or is overhauled, as then the milking operation can be continued with the second set of teat cups 65.

In an alternative embodiment, not shown, the second set of teat cups 65 is disposed on a supporting arm. The supporting arm can then be designed, for example, as an arm assembled from parts, which parts are hingeable relative to each other.

The construction in accordance with the invention further includes an emergency device 75, which serves as an energy source when the construction cannot utilize the electricity from the power mains. In the embodiments, the emergency device 75 is a battery 76. The battery 76 is connected to a battery charging station 77, by means of which the battery 76 is charged and kept in condition. The battery charging station 77 is connected to the power mains via an electric lead 78. It will be obvious that the emergency device 75 is not limited to a battery, but may alternatively be in the form of a current generating set. The emergency device 75 further includes a push button 79 located near the upright 11 and with the aid of which the emergency device 75 can be activated.

A first computer 81 is attached to the upright 11 by means of a first support 80. The first computer 81 includes a picture display screen 82 and a keyboard 83. Below the first computer 81, a second computer 85 is attached to the upright 11 by means of a second support 84. The second computer 85 also includes a picture display screen 82 and a keyboard 83. The second computer 85 is used for processing animal and management data, such as cow identification, mastitis detection, milk production check, etc.. The second computer 85 processes, for example, data received from the cow identification collar 86, from a (non-shown) mastitis detector, and from a milk production checking sensor. In addition, there are connected to the second computer 85 signalling means, with the aid of which it is checked whether a given exchangeable part is out of order. An example thereof are the sensors 50, by means of which it is checked whether the air lines 49 and the milk lines 48 are free from leaks. Thus, sensors, by means of which it can be checked whether the relevant part functions adequately, may also be included in the operating cylinders 28, 37, 43 and the laser 46. If a certain part of the construction does not or not adequately function, then the relevant sensor applies a signal to the memory of the second computer 85, whereafter an error message for the relevant part appears on the picture display screen 82. The error message is accompanied by a number corresponding to a number provided on the relevant exchangeable part. By repairing or replacing the faulty exchangeable part, the error message is cancelled and the milking operation can be resumed. The error message can in this situation also be passed on to a service department via a (non-shown) modem. Via the modem, this service department can communicate with the second computer 85 and thus ask for further data and discuss with the local operator whether and how the disturbance can be eliminated as soon as possible. The second computer 85 is further provided with (non-shown) switching means, with the aid of which less vital parts and/or tasks of the milking robot 12 can be switched off either manually or automatically. If, for example, a fault in the mastitis detector is found, then the second computer 85 automatically switches off the mastitis detection, so that the milk production can be continued in the normal way without the milk being checked for mastitis. The user is of course informed via the display screen 82 of the fact that the mastitis detector is out of order. In the event of a power cut, the second computer 85 automatically triggers the emergency device 75 with the aid of the switching means.

The first computer 81 of the construction is designed as a process computer. The process computer 81 controls inter alia the operating cylinders 28, 37 and 43 of the robot arm construction 31 and the cylinders by means of which the first teat cups 45 are retained on the carrier member 47. In addition, the process computer 81 controls inter alia the valve block 69, the air pump 71, the cleaning device 52 and the motor 22. The process computer 81 also processes the data received from the laser 46.

A number of processes can be made inoperative via the keyboard 83 of the first computer 81. This is particularly advantageous for the case in which, for example, one of the cylinders of the robot arm construction 31 is out of order and a substitute cylinder is not rapidly available. The user can then switch over the milking robot 12 with the aid of the keyboard 83 to a manually operable milking implement. The user then, for example, de-energizes the laser 46, as well as the operating cylinders 37, 43 and the motor 22. Using the keyboard 83 of the first computer 81, the user can thereafter readjust the operating cylinders 28 such that the first teat cups become located below the level of the teats of the cow 1. Thereafter, as is shown in Figure 1, the user can pivot the robot arm structure 31 from the position indicated by broken lines about the pivot shaft 40 to under the cow 1 (the position indicated by the solid lines). By temporarily switching off the cylinders by means of which the first teat cups 45 are pulled up against the carrier member 47, it becomes possible to connect manually the first teat cups 45 to the teats of the cow 1, whereafter milking can be started. The automatic decoupling of the first teat cups 45 can, just as previously during automatic milking, be effected automatically by energizing the cylinders of the first teat cups 45.

Both the first computer 81 and the second computer 85 are provided with (non-shown) printed circuits. The printed circuits are inserted by means of a rapidly de-couplable connection on a mother board. The printed circuits comprise signalling means which apply a signal to the memory of the relevant computer 81, 85, in the case of a malfunctioning of the relevant printed circuit. An error message of the relevant printed circuit then appears on the picture display screen of the computer 81, 85, whereafter the user can repair or replace the printed circuit.

## Claims

1. A construction for automatically milking animals, such as cows, comprising at least one automatically operating milking implement (45) and a milking robot including milking means, characterized in that the automatically operating milking implement is equipped with means (74), with the aid of which the automatically operating milking implement can be switched over to manual operation, while the construction furthermore includes a manually operable milking implement (65).

2. A construction as claimed in claim 1, characterized in that the construction includes a working pit arranged next to the milking box of the milking implement.

3. A construction as claimed in any one of the preceding claims, characterized in that the construction includes at least one emergency device (75), which serves as an energy source when the construction cannot make use of the electricity from the power mains.

4. A construction as claimed in claim 3, characterized in that the emergency device (75) includes at least one battery (76).

5. A construction as claimed in any one of the preceding claims, characterized in that the construction includes means for making inoperative a number of components and/or tasks of the construction which are not vital to the milking procedure, such as e.g. the milk production inspection or the teat disinfecting apparatus.

6. A construction as claimed in any one of the preceding claims, characterized in that the construction includes at least one battery (76) for the power supply of the milking implement.

7. A construction as claimed in any one of the preceding claims, characterized in that the construction includes a carrier member (47) on which teat cups (45) are disposed.

8. A construction as claimed in any one of the preceding claims, characterized in that the carrier member (47) is attached to a straight guide (8), by means of which the teat cups (45) are movable to near the leading side of the milking box.

9. A construction as claimed in claim 7 or 8, characterized in that in the rest position the teat cups (45) are held to the carrier member (47) by a cylinder.

10. A construction as claimed in claim 7 or 8, characterized in that the teat cups (45) are held against the carrier member (47) by means of electromagnets.

11. A construction as claimed in claim 9 or 10, characterized in that by means of the switching means the force can be eliminated, by means of which the teat cups (45) are held against the carrier member (47).

12. A construction as claimed in claim 11, characterized in that using the switching means the force with which the teat cup (45) is pulled against the carrier member (47) can be switched off, so that the teat cup (45) can be removed manually from the carrier member (47).

13. A construction as claimed in any one of the preceding claims, characterized in that the construction has a second set of teat cups (65) with tubes (67, 68).

14. A construction as claimed in claim 13, characterized in that the construction has a plurality of valves (69) or cocks, by means of which the second set of teat cups (65) is couplable to a vacuum pump (71) of the milking implement.

15. A construction as claimed in claim 14, characterized in that the teat cups (45) accommodated on the carrier member (47) can be disconnected from the vacuum pump (71) by means of the valves (69) or cocks.

16. A construction as claimed in any one of claims 13 to 15, characterized in that the second set of teat cups (65) is accommodated on a supporting arm.

17. A construction as claimed in claim 16, characterized in that the supporting arm is formed by a plurality of parts which are pivotal relative to each other.

18. A construction as claimed in any one of the preceding claims, characterized in that the switching means comprise a panel (73) with switches (74), with the aid of which parts of the construction can be switched off.

## Patentansprüche

1. Anordnung zum automatischen Melken von Tieren, wie z. B. von Kühen, mit mindestens einer automatisch arbeitenden Melkvorrichtung (45) und einem Melkroboter mit Melkeinrichtungen,
dadurch gekennzeichnet, daß die automatisch arbeitende Melkvorrichtung mit Mitteln (74) versehen ist, durch die die Melkvorrichtung auf manuellen Betrieb umschaltbar ist, wobei die Anordnung ferner eine manuell zu betätigende Melkvorrichtung (65) aufweist.

2. Anordnung nach Anspruch 1,
gekennzeichnet durch eine Arbeitsgrube, die nahe der Melkbox der Melkvorrichtung angeordnet ist.

3. Anordnung nach einem der vorhergehenden Ansprüche,
gekennzeichnet durch mindestens ein Notstrom-Aggregat (75), das bei Spannungsausfall der Hauptstromversorgung als Energiequelle dient.

4. Anordnung nach Anspruch 3,
dadurch gekennzeichnet, daß das Notstrom-Aggregat (75) mindestens eine Batterie (76) aufweist.

5. Anordnung nach einem der vorhergehenden Ansprüche,
gekennzeichnet durch Einrichtungen, um eine Anzahl von Teilen und/oder Funktionen der Anordnung außer Betrieb zu setzen, die für den Melkvorgang nicht erforderlich sind, wie z. B. die Überwachung der Milchproduktion oder die Zitzen-Desinfektionsvorrichtung.

6. Anordnung nach einem der vorhergehenden Ansprüche,
gekennzeichnet durch mindestens eine Batterie (76) zur Stromversorgung der Melkvorrichtung.

7. Anordnung nach einem der vorhergehenden Ansprüche,
gekennzeichnet durch ein Tragglied (47), an dem Zitzenbecher (45) angeordnet sind.

8. Anordnung nach einem der vorhergehenden Ansprüche,
dadurch gekennzeichnet, daß das Tragglied (47) an einer geradlinigen Führung (8) angebracht ist, mittels der die Zitzenbecher (45) bis in die Nähe der Vorderseite der Melkbox zu bewegen sind.

9. Anordnung nach Anspruch 7 oder 8,
dadurch gekennzeichnet, daß die Zitzenbecher (45) in der Ruhelage von einem Zylinder an dem Tragglied (47) gehalten sind.

10. Anordnung nach Anspruch 7 oder 8,
dadurch gekennzeichnet, daß die Zitzenbecher (45) von Elektromagneten an dem Tragglied (47) gehalten sind.

11. Anordnung nach Anspruch 9 oder 10,
dadurch gekennzeichnet, daß die Kraft, von der die Zitzenbecher (45) an dem Tragglied (47) gehalten werden, mittels der Schalteinrichtung abzuschalten ist.

12. Anordnung nach Anspruch 11,
dadurch gekennzeichnet, daß die Kraft, mit der der Zitzenbecher (45) gegen das Tragglied (47) gezogen wird, mittels der Schalteinrichtung abzuschalten ist, so daß der Zitzenbecher (45) von dem Tragglied (47) manuell abnehmbar ist.

13. Anordnung nach einem der vorhergehenden Ansprüche,
gekennzeichnet durch einen zweiten Satz Zitzenbecher (65) mit Leitungen (67, 68).

14. Anordnung nach Anspruch 13,
gekennzeichnet durch mehrere Ventile (69) oder Hähne, mittels derer der zweite Satz Zitzenbecher (65) an eine Vakuumpumpe (71) der Melkvorrichtung anzuschließen ist.

15. Anordnung nach Anspruch 14,
dadurch gekennzeichnet, daß die auf dem Tragglied (47) angeordneten Zitzenbecher (45) mittels der Ventile (69) oder Hähne von der Vakuumpumpe (71) abzukoppeln sind.

16. Anordnung nach einem der Ansprüche 13 bis 15,
dadurch gekennzeichnet, daß der zweite Satz Zitzenbecher (65) auf einem Stützarm angeordnet ist.

17. Anordnung nach Anspruch 16,
dadurch gekennzeichnet, daß der Stützarm aus mehreren Teilen zusammengesetzt ist, die relativ zueinander zu verschwenken sind.

18. Anordnung nach einem der vorhergehenden Ansprüche,
dadurch gekennzeichnet, daß die Schalteinrichtung eine Tafel (73) mit Schaltern (74) aufweist, mittels derer Teile der Anordnung abzuschalten sind.

## Revendications

1. Dispositif de traite automatique d'animaux, tels que des vaches, comprenant au moins une machine à traire (45) fonctionnant automatiquement et un robot trayeur comportant des moyens de traite,
**caractérisé** en ce que la machine à traire fonctionnant automatiquement est équipée de moyens (74) à l'aide desquels la machine à traire fonctionnant automatiquement peut être commutée pour passer à l'opération manuelle, tandis que le dispositif comporte en outre une machine à traire (65) à commande manuelle.

2. Dispositif selon la revendication 1, caractérisé en ce que le dispositif comporte une fosse de travail située à côté de la stalle de traite de la machine à traire.

3. Dispositif selon l'une quelconque des revendications précédentes, caractérisé en ce que le dispositif comporte au moins un dispositif de secours (75) qui sert de source d'énergie quand le dispositif ne peut pas utiliser l'électricité venant du secteur.

4. Dispositif selon la revendication 3, caractérisé en ce que le dispositif de secours (75) comporte au moins une batterie (76).

5. Dispositif selon l'une quelconque des revendications précédentes, caractérisé en ce que le dispositif comporte des moyens pour mettre hors service un certain nombre d'éléments et/ou de fonctions qui ne sont pas essentiels pour l'opération de traite, tels que, par exemple, le contrôle de la production de lait ou l'appareillage pour désinfecter les trayons.

6. Dispositif selon l'une quelconque des revendications précédentes, caractérisé en ce que le dispositif comporte au moins une batterie (76) pour l'alimentation en énergie de la machine à traire.

7. Dispositif selon l'une quelconque des revendications précécentes,caractérisé en ce que le dispositif comporte un organe porteur (47) sur lequel des godets de trayons (45) sont disposés.

8. Dispositif selon l'une quelconque des revendications précédentes, caractérisé en ce que l'organe porteur (47) est attaché à un guide rectiligne (8) au moyen duquel les godets de trayons (45) sont mobiles jusqu'à proximité du côté antérieur de la stalle de traite.

9. Dispositif selon la revendication 7 ou 8, caractérisé en ce qu'en position de repos les godets de trayons (45) sont retenus à l'organe porteur (47) par un vérin.

10. Dispositif selon la revendication 7 ou 8, caractérisé en ce que les godets de trayons (45) sont retenus contre l'organe porteur (47) au moyen d'électro-aimants.

11. Dispositif selon la revendication 9 ou 10, caractérisé en ce qu'il est possible d'éliminer, au moyen des moyens de commutation, la force au moyen de laquelle les godets de trayons (45) sont retenus contre l'organe porteur (47).

12. Dispositif selon la revendication 11, caractérisé en ce qu'il est possible de couper, en utilisant les moyens de commutation, la force par laquelle le godet de trayon (45) est tiré contre l'organe porteur (47), de telle sorte que le godet de trayon (45) puisse être retiré manuellement de l'organe porteur (47).

13. Dispositif selon l'une quelconque des revendications précédentes, caractérisé en ce que le dispositif a un deuxième jeu de godets de trayons (65) avec des tubes (67, 68).

14. Dispositif selon la revendication 13, caractérisé en ce que le dispositif a une pluralité de vannes (69) ou de robinets, au moyen desquels le deuxième jeu de godets de trayons (65) peut être couplé à une pompe à vide (71) de la machine à traire.

15. Dispositif selon la revendication 14, caractérisé en ce que les godets de trayons (45) logés sur l'organe porteur (47) peuvent être déconnectés de la pompe à vide (71) au moyen des vannes (69) ou des robinets.

16. Dispositif selon l'une quelconque des revendications 13 à 15, caractérisé en ce que le deuxième jeu de godets de trayons (65) est logé sur un bras de support.

17. Dispositif selon la revendication 16, caractérisé en ce que le bras de support est formé d'une pluralité de pièces qui sont pivotantes entre elles.

18. Dispositif selon l'une quelconque des revendications précédentes, caractérisé en ce que les moyens de commutation comprennent un panneau (73) avec des commutateurs (74), à l'aide desquels des parties du dispositif peuvent être débranchées.
